(19) Europäisches Patentamt
European Patent Office
Office européen des brevets

(11) Veröffentlichungsnummer: **0 497 095 B1**

# (12) EUROPÄISCHE PATENTSCHRIFT

(45) Veröffentlichungstag der Patentschrift: **27.12.95**

(51) Int. Cl.$^{6}$: **B60T 8/00**

(21) Anmeldenummer: **92100175.6**

(22) Anmeldetag: **08.01.92**

## (54) Verfahren zur Anpassung von Schlupfschwellenwerten für ein Antriebs-Schlupf- und/oder ein Bremsschlupf-Regelsystem an die Bereifung eines Kraftfahrzeuges sowie Einrichtung zur Durchführung des Verfahrens

(30) Priorität: **26.01.91 DE 4102301**

(43) Veröffentlichungstag der Anmeldung:
**05.08.92 Patentblatt 92/32**

(45) Bekanntmachung des Hinweises auf die Patenterteilung:
**27.12.95 Patentblatt 95/52**

(84) Benannte Vertragsstaaten:
**ES FR GB IT**

(56) Entgegenhaltungen:
**EP-A- 0 393 375**
**WO-A-89/09710**
**DE-A- 3 226 074**
**DE-A- 3 724 575**
**US-A- 4 673 225**

(73) Patentinhaber: **MERCEDES-BENZ AG**
**Mercedesstrasse 136**
**D-70327 Stuttgart (DE)**

(72) Erfinder: **Zimmer, Richard, Dipl.-Ing.**
**Robert-Koch-Strasse 17**
**W-7012 Fellbach (DE)**
Erfinder: **Müller, Armin, Dipl.-Ing.**
**Südstrasse 142**
**W-7150 Backnang (DE)**
Erfinder: **Freitag, Rainer, Dipl.-Ing.**
**Panoramastrasse 57**
**W-7400 Nürtingen (DE)**

**EP 0 497 095 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Anpassung von Schlupfschwellenwerten für ein Antriebs-Schlupf- und/oder Bremsschlupf-Regelungssystem an die Bereifung eines Kraftfahrzeuges, wonach aus einer Erfassung dynamischer Daten des Fahrzeuges mittels den angetriebenen und den nicht angetriebenen Fahrzeugrädern einzeln zugeordneter Raddrehzahlsensoren, nämlich mindestens der Geschwindigkeit des Fahrzeuges und des Schlupfes der angetriebenen Fahrzeugräder, während sich das Fahrzeug in einem dynamisch stabilen Bewegungszustand befindet - Geradeausfahrt und Drehzahlgleichheit der angetriebenen Fahrzeugräder - auf den ausgenutzten Kraftschlußbeiwert zwischen der Fahrbahn und den angetriebenen Fahrzeugrädern geschlossen wird und aus der Korrelation zwischen diesem ausgenutzten Kraftschlußbeiwert ($\mu_a$) mit dem hierfür gemessenen Antriebsschlupf auf die $\mu$-Schlupf-Charakteristik der Bereifung geschlossen wird, und, falls der für die Momentübertragung erforderliche Schlupfbedarf der Bereifung größer/kleiner ist als ein für einen Standardtyp der Bereifung charakteristischer Wert die Ansprechschwellen für die Antriebs-Schlupf- und/oder die Antiblockier-Regelung angehoben bzw. abgesenkt werden.

Ein derartiges Verfahren ist durch die DE 37 41 247 C1 bekannt.

Nach diesem bekannten Verfahren wird in dem für das Fahrzeug, das mit den genannten Regelungseinrichtungen ausgerüstet ist, charakteristischen Fahrleistungsdiagramm, das - für die verschiedenen Getriebeübersetzungen - den Zusammenhang zwischen Geschwindigkeit und erreichbarer Fahrzeugbeschleunigung angibt, ein einem vorgegebenen Kraftschlußbeiwert $\mu_o$ vorgegebenen, mittleren Betrages von z.B. 0,4 entsprechendes Meßfenster ausgewählt, z.B. derjenige Meßbereich, der zwischen 0 km/h und 100 km/h die jeweils mit diesen Geschwindigkeiten verknüpften, erreichbaren Beschleunigungswerte beinhaltet, bei dem gewählten Erläuterungsbeispiel typische Werte um 2 $m/s^2$. Wann immer Wertepaare aus diesem Meßfenster erreicht werden, wobei die Fahrzeuggeschwindigkeit und dessen Vortriebsbeschleunigung aus für die Radumfangsgeschwindigkeiten der - nicht angetriebenen - Vorderräder nach Pegel und/oder Frequenz charakteristischen Ausgangssignalen von Raddrehzahlsensoren gewonnen werden, so wird aus den Radumfangsgeschwindigkeiten der angetriebenen Hinterräder, die ebenfalls mittels diesen einzeln zugeordneter Raddrehzahlsensoren gemessen werden, der aktuelle Wert des Antriebsschlupfes ermittelt. Erweist es sich hierbei, daß dieser Antriebsschlupf größer ist als der für eine Standard-Bereifung z.B. die Sommer-Bereifung des Fahrzeuges mit den dynamischen Daten des Fahrzeuges verträgliche bzw. mit diesen verknüpfte Antriebsschlupf $\lambda_o$, mit dem bei dem genannten Kraftschlußbeiwert $\mu_o$ das Antriebsmoment des Fahrzeuges absetzbar ist, so werden die Ansprechschwellen des Antriebs-Schlupfes sowie auch - im Falle der Antiblockierregelung - des Bremsschlupfes in Proportionalität zu dem gemessenen Unterschied angehoben bzw. abgesenkt. Im Ergebnis wird eine punktuelle Erfassung der $\mu$-Schlupf-Charakteristik der Bereifung erreicht, derart, daß der für Winter- und Sommerreifen unterschiedliche Schlupfbedarf für die Absetzung von Antriebs- bzw. Brems-Momenten adäquat berücksichtigt wird.

Dieses bekannte Verfahren vermittelt insoweit zwar eine durchaus wirksame Berücksichtigung unterschiedlicher $\mu$-Schlupf-Charakteristikender jeweils verwendeten Bereifungen im Sinne einer Anpassung des Regelungsverhaltens sowohl der Antriebs-Schlupf-Regelung als auch der Antiblockier-Regelung, jeweils im Sinne einer bessereren Ausnutzbarkeit im Antriebsstrang bereitgestellter Antriebsmomente bzw. mittels der Bremsanlage entfaltbarer Bremskräfte, ist jedoch, im wesentlichen wegen der Beschränkung der auswertbaren Daten auf ein Meßfenster, das einem bestimmten Kraftschluß-Beiwert $\mu_o$ zugeordnet ist, mit zumindest den folgenden Nachteilen behaftet:

1. Für den Fall, daß die Antriebs-Schlupf-Erfassung bei steiler Bergauf- oder Bergab-Fahrt erfolgt, ist die Messung zwangsläufig mit Fehlern behaftet, die zu einer inadäquaten Anhebung bzw. Absenkung der Ansprechschwellen führen kann.

2. Durch die Begrenzung der Datenerfassung auf das genannte vergleichsweise "enge" Meßfenster erfolgt eine Überprüfung der ausnutzbaren Kraftschluß-Beiwerte und eine entsprechende Veränderung der Schlupf-Schwellen relativ selten, so daß eine Kraftschluß-abhängige Veränderung der Ansprechschwellen praktisch nicht möglich ist. Die "Aktualisierung" der Ansprechschwellen erfolgt zwangsläufig sehr träge.

Aufgabe der Erfindung ist es daher, ein Verfahren der eingangs genannten Art dahingehend zu verbessern, daß die Anpassung der Schlupfschwellen unabhängig von den topographischen Verhältnissen jeweils situationsgerecht erfolgt und eine schnellere Aktualisierung der Antriebs- oder Bremsschlupf-Schwellenwerte der beiden Regelungsarten möglich ist, sowie eine Einrichtung zur Durchführung des Verfahrens anzugeben.

Diese Aufgabe wird hinsichtlich des Verfahrens durch die im kennzeichnenden Teil des Patentanspruchs 1 genannten Merkmale, dem Grundgedanken nach, und in weiteren Ausgestaltungen durch die Merkmale der Unteransprüche 2 und 3 und hinsichtlich der Einrichtung durch die Merkmale der Ansprüche 4 bis 7 gelöst.

Hiernach wird aus einem Motorkennfeld, das den Zusammenhang zwischen Kraftstoffzufuhr und/oder Luftzufuhr mit der Motordrehzahl wiedergibt, und der Gesamtübersetzung des Antriebsstranges das an den angetriebenen Fahrzeugrädern bereitgestellte Antriebsmoment ermittelt. Dadurch ist bei vorgegebener - entweder als einem Mittelwert entsprechend angenommener Normalkraft oder, falls diesbezügliche Meßeinrichtungen vorgesehen sind, wie z.B. auf den Einfederungszustand der Fahrzeugräder ansprechende Sensoren oder für den Druck in einem Niveauregulierungssystem charakteristische Signale erzeugende Druckgeber, gemessener Normalkraft die an den angetriebenen Fahrzeugrädern wirksame Zugkraft $K_Z$ ermittelbar, die der Relation

$$K_Z = \mu_a . K_N$$

genügt, in welcher mit $\mu_a$ der ausgenutzte Kraftschlußbeiwert und mit $K_N$ die wirksame Normalkraft bezeichnet sind, und daher der ausnutzbare Kraftschlußbeiwert $\mu_a$ bestimmbar, gemäß der Beziehung

$$\mu_a = K_Z/K_N.$$

Eine fortlaufende Auswertung dieser Beziehung ist im Rahmen einer zur Durchführung des Verfahrens vorgesehenen Einrichtung mit gängigen technischen Mitteln möglich.

Es wird also fortlaufend der jeweils ausnutzbare Kraftschlußbeiwert $\mu_a$ ermittelt und gleichzeitig aus dem ebenfalls permanent erfaßbaren Wert des Antriebsschlupfes die $\mu$-Schlupf-Charakteristik der Bereifung bestimmt, wobei die hierfür geeigneten Situationen des Fahrzeuges daran erkannt werden, daß sowohl die als nicht angetrieben vorausgesetzten Vorderräder gleiche Radumfangsgeschwindigkeit haben, was als ein Indiz für Geradeausfahrt des Fahrzeugs gewertet wird, und auch die angetriebenen Hinterräder gleiche, wenngleich größere, Radumfangsgeschwindigkeiten haben, aus denen durch Vergleich mit den Radumfangsgeschwindigkeiten der Vorderräder der Antriebsschlupf bestimmt wird und aus der Gleichheit der Antriebs-Schlupf-Werte der angetriebenen Hinterräder auf stabiles dynamisches Verhalten des Fahrzeuges geschlossen wird.

Die hieraus resultierenden Vorteile des erfindungsgemäßen Verfahrens sind zumindest die folgenden:

1. Der aus dem an den angetriebenen Fahrzeugrädern bereitgestellten Antriebsmoment und den hiermit korrelierten Antriebs-Schlupf-Werten erfaßbare Betrag des ausnutzbaren Kraftschlusses ist unabhängig von der Fahrbahn-Topographie und daher in jedem Fall situationsgerecht und
2. die Aktualisierung der solchermaßen erkennbaren Kraftschluß-Beiwerte und Schlupf-Bedarfswerte ist wesentlich zeitnaher, weil häufiger erfolgend, als bei dem bekannten Verfahren, das auf die Erfassung entsprechender Wertepaare in einem begrenzten Meßfenster-Bereich beschränkt ist.

Im Ergebnis werden dadurch eine Vielzahl ansonsten möglicher Fehler in der "Regelstrategie" vermieden, z.B. ein "zu frühes" Ansprechen der Antriebs-Schlupf-Regelung bei Bergauffahrt oder auch fehlerhaftes Ansprechen der Regelung in Fällen, in denen durch den Betrieb des Fahrzeuges die $\mu$-Schlupf-Charakteristik insbesondere der angetriebenen Fahrzeugräder sich ändert, z.B. dadurch, daß sich aufgrund der Fahrweise die Reifen der angetriebenen Hinterräder stark erwärmen und dadurch eine Erhöhung des Schlupf-Bedarfes zur Übertragung einer vorgegebenen Zugkraft eintritt.

Das in den angetriebenen Fahrzeugrädern bereitgestellte Antriebsmoment kann - über das Motorkennfeld aus dem Massenliefergrad der den Brennkammern des Motors zugeführten Verbrennungsluft - alternativ oder auch in Kombination hiermit aus der dem Motor zugeführten Kraftstoffmenge ermittelt werden, d.h. Daten, die bei den heutigen Motorsteuerungen, durch die letztendlich eine optimale Ausnutzung des Kraftstoffes und/oder auch die Voraussetzungen für eine katalytische Minimierung des Schadstoff-Ausstoßes erreicht werden soll, ohnehin für eine Verarbeitung in elektronischen Steuergeräten bereitgestellt werden und daher auch mit Vorteil für die Ermittelung der Bereifungs-Kennwerte ausgenutzt werden können.

Möglich ist auch eine Erfassung des an den angetriebenen Fahrzeugrädern bereitgestellten Antriebsmoments über im Antriebsstrang angeordnete Kraft- bzw. Moment-Sensoren, mittels derer z.B. tordierende Verformungen von Elementen des Antriebs-Stranges, insbesondere der Gelenkwelle und/oder in den Gelenken selbst wirksame Kräfte erfaßbar sind.

Das erfindungsgemäße Verfahren bietet dadurch, daß es auch die Erfassung niedriger Kraftschluß-Beiwerte ermöglicht, auch den Vorteil, im Bereich extrem niedriger Kraftschlußbeiwerte von z.B. 0,3 und darunter, eine adäquate Nachführung der Ansprech-Schwellen der jeweiligen Regelungsarten zu realisieren und dadurch ein sensibles Regelungsverhalten auch bei extrem "schlechten" Straßenverhältnissen zu erzielen.

Insoweit können z.B. im Bereich solcher niedriger Kraftschlußbeiwerte Regelalgorithmen zur Anwendung gelangen, die insbesondere auf ein dynamisch-stabiles Verhalten des Fahrzeuges im Nie-

der-$\mu$-Bereich geeignet sind.

Hinsichtlich einer Einrichtung zur Durchführung des erfindungsgemäßen Verfahrens wird die eingangs genannte Aufgabe in spezieller Gestaltung durch die Merkmale des Anspruchs 4 gelöst, deren Vorzug darin zu sehen ist, daß die Ermittelung des Motormoments aus dem mittleren effektiven Verbrennungsdruck und dem Hubraum des Motors für praktisch alle gängigen Fahrzeugtypen brauchbar ist, ohne auf weitere spezielle Charakteristika ihrer Motorkennlinien angewiesen zu sein, was im Hinblick auf eine gleichsam universelle Einsetzbarkeit der Einrichtung von erheblichem Vorteil ist.

In Kombination hiermit ist mittels des Ausgangssignals eines gängigen temperaturempfindlichen Luftmassensensors eine für die Ermittelung des Motormoments geeignete Meßgröße erfaßbar.

Wenn, wie gemäß Anspruch 6 vorgesehen, auch eine Einrichtung zur Erfassung des Beladungszustandes des Fahrzeuges vorhanden ist, so kann diese auch zur Erkennung von Steigungen oder Neigungen der Fahrbahn ausgenutzt werden und zu einer zweckentsprechenden Änderung der Ansprechschwellen der Regelungsarten bei Bergauf- und Bergabfahrten.

Es versteht sich, daß die hierfür erforderlichen Abwandlungen der elektronischen Steuereinheiten der jeweiligen Regelungseinrichtung(en) einem einschlägig vorgebildeten Fachmann bei Kenntnis des Nutzungszweckes mit gängigen Mitteln der elektronischen und/oder elektrohydraulischen Schaltungstechnik möglich sind.

Dasselbe gilt sinngemäß auch für die gemäß Anspruch 7 vorgesehene Gestaltung der erfindungsgemäßen Einrichtung, die eine besonders einfache und schnelle Erfassung einer für den Reifenkennlinieverlauf signifikanten Größe ermöglicht.

Weitere Einzelheiten und Merkmale ergeben sich aus der nachfolgenden Beschreibung des erfindungsgemäßen Verfahrens und einer zu seiner Durchführung geeigneten Einrichtung anhand der Zeichnung. Es zeigen

- Fig. 1 ein vereinfachtes Blockschaltbild einer erfindungsgemäßen Einrichtung zur Anpassung von Schlupfschwellenwerten für ein Antriebs-Schlupf-Regelsystem an die Bereifung eines Kraftfahrzeuges, das auch mit einem Antiblockiersystem ausgerüstet ist,
- Fig. 2 ein Diagramm mit $\mu$-Schlupfkurven für eine Sommer bereifung und eine Winterbereifung eines Fahrzeuges, zur Erläuterung der der Erfindung zugrundeliegenden Problematik,
- Fig. 3 ein Motoren-Kennfeld zur Erläuterung eines erfindungsgemäßen Verfahrens, das mittels der Einrichtung gemäß Figur 1 automatisch durchführbar ist.
- Fig. 4 ein vereinfachtes Blockschaltbild einer im Rahmen der Einrichtung gemäß Figur 1 vorgesehenen elektronischen Verarbeitungseinheit.

In der Figur 1 sind, jeweils in stark vereinfachter, schematisierter Darstellung, der insgesamt mit 10 bezeichnete Antriebsstrang und die insgesamt mit 11 bezeichnete hydraulische Zweikreis-Bremsanlage eines Straßenfahrzeuges dargestellt, das einen Hinterachs-Antrieb hat und eine Bremskreis-Aufteilung, bei der die linke Vorderradbremse 12 und die rechte Vorderradbremse 13 zu einem Vorderachs-Bremskreis I und die linke Hinterradbremse 14 und die rechte Hinterradbremse 16 zu einem Hinterachs-Bremskreis II zusammengefaßt sind, zu deren Bremsdruck-Beaufschlagung ein Bremsgerät 17, z.B. ein Tandem-Hauptzylinder mit Unterdruck-Bremskraftverstärker, vorgesehen ist.

Das Fahrzeug ist auch mit einem Antiblockiersystem (ABS) ausgerüstet, das durch seine schematisch angedeutete Hydraulikeinheit 18 repräsentiert ist, sowie mit einer Antriebs-Schlupf-Regeleinrichtung (ASR), die ebenfalls lediglich durch eine zusätzliche Hydraulikeinheit 19 repräsentiert ist.

Für das ABS 18 sei - ohne Beschränkung der Allgemeinheit - angenommen, daß es in für sich bekannter Bau- und Funktionsweise als nach dem Rückförderprinzip arbeitend realisiert ist, wonach in Bremsdruck-Abbau-Phasen der Antiblockierregelung aus einer der Regelung unterworfenen Radbremse abgelassene Bremsflüssigkeit in die Hauptbremsleitung 21 bzw. 22 desjenigen Bremskreises I bzw. II zurückgepumpt wird, an dem die Antiblockierregelung wirksam ist.

Für die ASR sei angenommen, daß sie nach dem Prinzip arbeitet, ein angetriebenes Fahrzeugrad, das zum Durchdrehen neigt, durch Aktivierung seiner Radbremse 14 bzw. 16 wieder zu verzögern und, spätestens dann, wenn beide Hinterräder des Fahrzeuges zum Durchdrehen neigen, das Ausgangsdrehmoment des Fahrzeugmotors 23 zu reduzieren, z.B. durch mittels eines Elektromotors 24 gesteuerte Veränderung der Stellung der Drosselklappe 26, über die die Zufuhr von Verbrennungsluft zu den Brennräumen des Motors 23 steuerbar ist oder durch Reduzierung der Kraftstoffzufuhr und/oder - bei fremdgezündeten Motoren - durch Eingriff in die Zündung. Da im Rahmen der ABS-Hydraulikeinheit 18 vorhandene - nicht dargestellte - zur Steuerung von Bremsdruck-Abbau-, Bremsdruck-Halte- und Bremsdruck-Aufbau-Phasen vorgesehene Bremsdruck-Regelventile für die Antriebs-Schlupf-Regelung zweckanalog ausgenutzt werden können, ist die Hydraulikeinheit 19 der Antriebs-Schlupf-Regeleinrichtung lediglich als eine zusätzliche, "zwischen" das Bremsgerät 17 und die ABS-Hydraulikeinheit 18 geschaltete Hydraulikeinheit dargestellt, die, was im einzelnen nicht dargestellt ist, ein Hilfsdruckquelle umfaßt, mit deren Ausgangsdruck die jeweils zur Antriebs-Schlupf-Regelung ausgenutzte Hinterradbremse(n) 14 und/oder 16 ist/sind, sowie eine Steuerventilanordnung, mittels derer die Hilfsdruckquelle im Falle einer Antriebs-Schlupf-regelungsbedürftigen Situation an den Bremskreis II der angetriebenen Hinterräder anschließbar und gegen das Bremsgerät absperrbar ist. Die als Magnetventile ausgebildeten, sowohl für den Antiblockier- als auch für den Antriebs-Schlupf-Regelungsbetrieb ausgenutzten Bremsdruck-Regelventile und die ebenfalls als Magnetventile ausgebildeten Funktionssteuerventile der ASR-Hydraulikeinheit 19 werden in dem jeweiligen Regelungszweck entsprechender Folge und Kombination durch Ausgangssignale einer für die beiden Regelungseinrichtungen gemeinsamen elektronischen Steuerungseinheit 27 angesteuert, welche diese Ausgangssignale aus einer Verarbeitung von nach Pegel und/oder Frequenz die Information über das dynamische Verhalten der Fahrzeugräder enthaltenden, elektrischen Ausgangssignalen den Fahrzeugrädern einzeln zugeordneter Raddrehzahlsensoren 28 und 29 sowie 31 und 32 erzeugt. Als weitere Eingabe ist der elektronischen Steuereinheit 27 auch das Ausgangssignal des Bremslichtschalters 33 zugeleitet.

Sowohl die Antriebs-Schlupf-Regeleinrichtung 19,27 als auch das Antiblockiersystem 18,27 werden u.a. aktiviert, die Antriebs-Schlupf-Regeleinrichtung mit einer einen Regelzyklus einleitenden Bremsdruck-Aufbau-Phase an einer der Hinterradbremsen 14,16, das Antiblockiersystem 18,27 mit einer einen Antiblockier-Regelzyklus einleitenden Bremsdruck-Abbau-Phase an mindestens einer der Radbremsen 12,13,14 und/oder 18, wenn ein Schwellenwert $\lambda_A$ des Antriebsschlupfes bzw. ein Schwellenwert $\lambda_B$ des Bremsschlupfes überschritten wird, wobei der Antriebsschlupf $\lambda_a$ durch die folgende Beziehung

$$\lambda_a = (v_{RA} - v_F)/v_F \qquad (1)$$

definiert ist, in welcher mit $v_{RA}$ die Radumfangsgeschwindigkeit eines angetriebenen Fahrzeugrades und mit $v_F$ die Fahrzeuggeschwindigkeit bezeichnet sind, und der Bremsschlupf $\lambda_b$ durch die Beziehung

$$\lambda_b = (v_F - v_{RB})/v_F \qquad (2)$$

definiert ist, in welcher mit $v_{RB}$ die Radumfangsgeschwindigkeit des gebremsten Fahrzeugrades bezeichnet ist.

Während im Falle der Antriebs-Schlupf-Regelung als Fahrzeuggeschwindigkeit die Radumfangsgeschwindigkeit eines nicht angetriebenen Fahrzeugrades angenommen werden kann, muß bei einer Bremsung, in deren Verlauf sämtliche Fahrzeugräder mit geringerer Umfangsgeschwindigkeit als der Fahrzeuggeschwindigkeit drehen, eine die Fahrzeuggeschwindigkeit repräsentierende Referenzgeschwindigkeit $v_{Ref}$ ermittelt werden, die von der elektronischen Steuereinheit 27 nach einem geeignet vorgegebenen Algorithmus generiert wird.

Unter Zugrundelegung dieser Definitionen des Antriebs-Schlupfes $\lambda_a$ und des Brems-Schlupfes $\lambda_b$ ist das Tangentialkraft-Übertragungsverhalten eines Reifens durch eine $\mu$-Schlupf-Kurve darstellbar, in welcher als Abszisse der jeweilige Schlupf und als Ordinate der Kraftschlußbeiwert $\mu$ aufgetragen ist, der den auf das Fahrzeuggewicht G bezogenen Traktions- bzw. Verzögerungs-Kraftanteil angibt, der bei einem vorgegebenen Wert des Antriebs- bzw. des Brems-Schlupfes ausnutzbar ist.

Derartige $\mu$-Schlupf-Kurven oder "Reifenkennlinien" können für Sommer- und Winterreifen einen drastisch verschiedenen Verlauf haben, wodurch sich auch ein drastisch verschiedenes Ansprechverhalten einer Antiblockier- und/oder einer Antriebs-Schlupf-Regelung ergibt.

In der Figur 2, auf deren Einzelheiten nunmehr verwiesen sei, ist eine in ausgezogener Linienführung dargestellte, erste Reifenkennlinie insgesamt mit 34 bezeichnet, die den für einen Sommerreifen charakteristischen Verlauf hat. Jedem Punkt dieser Reifenkennlinie 34 entspricht ein $(\mu_a,\lambda_a)$ bzw. $(\mu_a,\lambda_b)$-Wertepaar, das angibt, welcher Kraftschlußbeiwert $(\mu_a)$, sei es zur Beschleunigung oder zur Verzögerung des Fahrzeuges, bei welchem Antriebs-Schlupf-$\lambda_a$ bzw. Bremsschlupf $\lambda_b$ ausnutzbar ist. Soweit nachfolgend lediglich der Buchstabe "$\lambda$" als Schlupf-Bezeichnung benutzt ist, soll hierunter sowohl der Antriebs-Schlupf $\lambda_a$ als auch der Bremsschlupf $\lambda_b$ verstanden sein. Diese erste, für einen Sommerreifen charakteristische Kennlinie 34 gilt für den Fall, daß das Fahrzeug sich auf trockener, griffiger Straße bewegt, die sowohl zum Vortrieb als auch zur Abbremsung des Fahrzeuges die Ausnutzung eines maximalen Kraftschlußbeiwertes $\mu_a$ von 1,0 ermöglicht, d.h. eine Zugkraft $F_z$ oder eine Bremskraft $F_B$ übertragbar - ausnutzbar - ist, deren maximaler Betrag dem Fahrzeuggewicht G entspricht. Es sei angemerkt, daß, je nach der Beschaffenheit des Reifens und/oder der Fahrbahn sowie dem dynamischen Zustand des Fahrzeuges auch höhere Kraftschlußbeiwerte als 1 ausnutzbar sein können, z.B. aufgrund der Luftabtriebskräfte bei hohen Fahrzeuggeschwindigkeiten, aber auch aufgrund spezieller Materialauswahl für die Reifen wodurch allein schon $\mu$-Werte um 1,2 erreichbar sind.

Für das gewählte Erläuterungsbeispiel sei angenommen, daß ein Kraftschlußbeiwert $\mu_a$ mit einem Maximalbetrag von 1 ausnutzbar sei. Diesem Maximalwert entspricht ein Maximum 36 der Reifenkennlinie 34, das diese bei einem Wert des Schlupfes λ von 0,5 erreicht. Zwischen dem Koordinatenursprung ($\mu_a$ = 0, λ = 0) und einem Wert des Schlupfes λ von etwa 0.3 hat die Reifenkennlinie 34 einen steil ansteigenden zum Schlupf λ annähernd proportionalen Ast 37, entlang dessen der ausnutzbare Kraftschlußbeiwert $\mu_a$ zwischen 0 und 0,75 variiert. Zu größeren Werten des Schlupfes λ hin, d.h. zwischen den Werten 0,3 und 0,5 hat die Reifenkennlinie 34 einen gekrümmten Ast 38, entlang dessen die Steigung der Reifenkennlinie stetig abnimmt, bis sie im Maximum 36 zu 0 wird. An diesen - noch ansteigenden - Ast 38 schließt sich im Maximum 36 mit glatter Krümmung, ab diesem mit zunächst zunehmendem Betrag der Steigung abfallender Ast 39 der Reifenkennlinie an, deren Abfall bei einem Wert des Schlupfes von etwa 0,75 seinen Maximalwert von etwa 0,5 ($\Delta\mu/\Delta\lambda$ = -0,5) erreicht. An diesen zu größeren λ -Werten hin zunehmend abfallenden Ast 39 der Reifenkennlinie 34 schließt sich wiederum mit glatter Krümmung ein weiterer abfallender Ast 41 der Reifenkennlinie 34 an, entlang dessen der Betrag der Steigung abnimmt und schließlich, gemäß der Darstellung der Figur 2 bei λ = 1.0 in einen "horizontalen" Ast 42 der Reifenkennlinie 34 übergeht, entlang dessen - zu größeren Werten des Antriebsschlupfes $\lambda_a$ hin der ausnutzbare Kraftschlußbeiwert $\mu_a$ konstant bleibt und beim dargestellten Erläuterungsbeispiel den Wert 0,8 hat.

Charakteristisch für den hinsichtlich seines Übertragungsverhaltens durch die Reifenkennlinie 34 repräsentierten Sommerreifen ist, daß er bei niedrigen Schlupfwerten relativ hohe Zug- und Bremswerte zwischen Fahrbahn und Rad übertragen kann.

Desweiteren ist in dem Diagramm der Figur 2 eine insgesamt mit 43 bezeichnete, zweite Kennlinie eingezeichnet, deren Verlauf in dem $\mu$-/λ -Diagramm demjenigen eines typischen Winterreifens entspricht, der eine grob-strukturierte Profilierung und eine relativ härtere Gummimischung hat als ein typischer Sommerreifen.

Auch diese "Winterreifenkennlinie" 43 hat einen zwischen dem Koordinatenursprung und einem Schlupfwert von etwa 0,6 in guter Näherung linear ansteigenden Ast 44, der einem mit dem Schlupf anwachsenden Betrag des ausnutzbaren Kraftschlußbeiwertes $\mu_a$ entspricht. Diesen linear ansteigenden Ast 44 zu größeren Schlupfwerten hin fortsetzend und glatt an den linearen Anfangsabschnitt 44 anschließend folgt ein gekrümmter Übergangsast 46, der etwa bei dem Wertepaar ($\mu$ = 0,9; λ = 0,8) glatt in einen parallel zur λ -Achse verlaufenden - "horizontalen" - Ast 47 übergeht, entlang dessen der ausnutzbare Kraftschlußbeiwert annähernd konstant bleibt und beim dargestellten Erläuterungsbeispiel etwa den Wert 0,9 hat.

Diese zweite, für einen typischen Winterreifen charakteristische Reifenkennlinie 43 gilt für denselben Fall wie die Sommerreifenkennlinie 34, nämlich, daß mit dem Fahrzeug eine trockene, griffige Straße befahren wird, die bei Verwendung von Sommerreifen die Ausnutzung eines maximalen Kraftschlußbeiwertes von 1,0 ermöglichen würde, während im Unterschied dazu der Winterreifen lediglich die Ausnutzung eines maximalen Kraftschlußbeiwertes von 0,9 erlaubt. Die Winterreifenkennlinie 43 verläuft zwischen dem Koordinatenursprung des Diagramms der Figur 2 und ihrem horizontalen Ast 47 wesentlich flacher, verglichen mit der Sommerreifenkennlinie 34 im Koordinaten-Ursprungsbereich etwa mit der halben Steigung, was gleichbedeutend damit ist, daß der Schlupfbedarf des durch die Kennlinie 43 repräsentierten Winterreifens, um einen vorgegebenen Kraftschluß-Beiwert ausnutzen zu können, etwa doppelt so hoch ist wie derjenige eines Sommerreifens.

Desweiteren ist eine zweite, insgesamt mit 34' bezeichnete Sommerreifenkennlinie strichpunktiert eingezeichnet, die für dieselbe Art von Bereifung gültig ist wie die erste Sommerreifenkennlinie 34, jedoch für den Fall gilt, daß die Fahrzeugräder auf einem Untergrund abrollen, der wesentlich weniger griffig ist und die Ausnutzung eines maximalen Kraftschlußbeiwertes von höchstens 0,5 ermöglicht. Der für dieselbe Verkehrssituation geltende Verlauf der Winterreifenkennlinie ist gestrichelt und doppelt punktiert durch die insgesamt mit 43' bezeichnete Verlaufskurve wiedergegeben, deren Verlauf qualitativ demjenigen der Winterreifenkennlinie 43 entspricht, jedoch mit dem Betrage nach niedrigeren Werten der Steigung.

Das dem unterschiedlichen Verlauf der Sommer- und Winter-Reifenkennlinien 34 bzw. 43 entsprechend verschiedene Tangentialkraft-Übertragungsverhalten einer Sommer- und Winterbereifung ist sowohl unter Gesichtspunkten der Antiblockier-Regelung als auch derer der Antriebs-Schlupf-Regelung problematisch, wenn die Schlupf-Ansprechschwellen für die jeweilige Regelungsart gleichsam als "feste" Schwellenwerte $\lambda_A$ und $\lambda_B$ vorgegeben sind, z.B. mit $\lambda_A$ = 0,4 als Schwellenwert für das Ansprechen der Antriebs-Schlupf-Regelung und $\lambda_B$ = 0,3 als Ansprech-Schwellenwert für die Antiblockier-Regelung, wobei davon ausgegangen sei, daß diese Wahl der Ansprech-Schwellenwerte $\lambda_A$ und $\lambda_B$ an die überwiegend benutzte Sommerbereifung eines Fahrzeuges angepaßt ist. Unter diesen Voraussetzungen ergibt dann ein Umrüsten des Fahrzeuges auf die Winterbereifung, daß, mit dieser, bei einem Ansprechen der Antriebs-Schlupf- bzw. der Antiblockier-Regelung nur noch Werte um 50 bis 60% derjenigen Werte der Fahrzeugbeschleunigung bzw. Fahrzeugverzögerung erreichbar sind, die unter jeweils vergleichbaren Straßenverhältnissen mit einem Sommerreifen erreicht werden könnten, was aber lediglich daraus resultiert, daß die Tangentialkraft-Übertragungsfähigkeit des Winterreifens, der zur Übertragung einer bestimmten Zug- bzw. Bremskraft einen höheren Schlupfbedarf hat, wegen der zu niedrig angesetzten Schlupfschwellen $\lambda_A$ bzw. $\lambda_B$ nicht ausgenutzt werden kann.

Um unabhängig von der jeweils benutzten Art der Bereifung des Fahrzeuges eine optimale Einstellung der Schlupf-Ansprechschwellen sowohl für die Antiblockier-Regelung als auch für die Antriebs-Schlupf-Regelung zu erzielen, ist bei dem in der Figur 1 durch seinen Antriebsstrang 10, seine Bremsanlage 11 und die Antriebs-Schlupf- und Antiblockier-Regeleinrichtungen 19,27 sowie 18,27 repräsentierten Fahrzeug eine elektronische Verarbeitungseinheit 48 vorgesehen, die nachfolgend anhand ihrer Funktion erläutert wird, deren elektronischschaltungstechnische Realisierung einem einschlägig vorgebildeten Fachmann bei Kenntnis ihres Zweckes auf vielfältige Weise ohne weiteres möglich ist, so daß eine Erläuterung schaltungstechnischer Einzelheiten dieser Verarbeitungseinheit 48 nicht erforderlich erscheint.

Die elektronische Verarbeitseinheit 48 vermittelt eine fortlaufende Erfassung des jeweils ausgenutzten Kraftschlußbeiwertes $\mu_a$ und die Ermittelung des momentanen Antriebsschlupfes $\lambda_a$.

Die elektronische Verarbeitungseinheit 48, zu deren mehr in die Einzelheiten gehender Erläuterung nunmehr auch auf das Blockschaltbild der Figur 4 verwiesen sei, umfaßt eine elektronische Rechnerstufe 49, der die folgenden - variablen - Eingaben zugeleitet sind:

1. Die Motordrehzahl $\nu$, für die das Ausgangssignal eines die Drehzahl der Kurbelwelle des Motors 23 erfassenden Drehzahlsensors 51 nach Pegel und/oder Frequenz ein Maß ist,
2. der Luftmassenliefergrad $M_L$ der dem Motor 23 zugeführten Verbrennungsluft, wofür das Ausgangssignal eines unmittelbar stromab von der Drosselklappe 26 und stromauf von den Ansaugkrümmern 52 des insgesamt mit 53 bezeichneten Kraftstoff-/Luft-Versorgungstraktes angeordneten Hitzdraht-Anemometers 54 ein Maß ist,
3. die Raddrehzahl $\nu_{HL}$ und/oder $\nu_{HR}$ mindestens eines der angetriebenen Fahrzeugräder, für welche das Ausgangssignal des Raddrehzahlsensors 31 und/oder 32 nach Pegel und/oder Frequenz ein Maß ist. Alternativ oder zusätzlich zu der Eingabe des Luftmassen-Liefergrades kann der elektronischen Rechnerstufe 49 als weitere Eingabe auch die Information über die dem Motor 23 in der Zeiteinheit zugeführte Kraftstoffmenge zugeleitet werden, die sich z.B. aus den Öffnungszeiten der als Magnetventile vorausgesetzten Einspritzventile 56 des Kraftstoff-/Luft-Versorgungstraktes - bei Kenntnis der Förderleistung der Kraftstoffpumpe 57 - auf einfache Weise bestimmen läßt.
4. Die Hinterachslast $L_{HA}$, die entweder Fahrzeugtypspezifisch fest angegeben sein kann oder variabel, in welchem Falle ein für die Hinterachslast charakteristisches elektrisches Signal z.B. durch einen auf den Einfederungszustand der Hinterachs-Aufhängung ansprechenden, nicht eigens dargestellten Weg- oder Kraftsensor gewonnen werden kann.

Aus einer rechnerischen Verarbeitung dieser Angaben erzeugt die Rechnerstufe 49 eine Ausgabe, die ein Maß für den momentan ausgenutzten Kraftschlußbeiwert $\mu_a$ ist.

Hierbei wird $\mu_a$ aus der Beziehung

$$\mu_a = F_Z/L_{HA} \qquad (3)$$

bestimmt, in welcher mit $F_Z$ die gegenüber der Fahrbahn absetzbare, auf das Fahrzeug wirkende Zugkraft des Antriebsstranges 10 des Fahrzeugs bezeichnet ist, die ihrerseits durch die Beziehung

$$F_Z = M_Z/r_{dyn} \qquad (4)$$

gegeben ist, in welcher mit $r_{dyn}$ der als konstant ansetzbare dynamische Rollradius der angetriebenen Fahrzeugräder und mit $M_Z$ das über die Fahrbahn abgesetzte Vortriebsmoment des Antriebsstranges 10 bezeichnet sind, das seinerseits der Beziehung

$$M_Z = M_{mot} \cdot i_{Ges} \cdot \eta_A \qquad (5)$$

genügt, in welcher mit $i_{Ges}$ die Gesamtübersetzung des Antriebsstranges 10, mit $\eta_A$ der mechanische Gesamtwirkungsgrad des Antriebsstranges 10 des Fahrzeuges und mit $M_{mot}$ das Ausgangsdrehmoment des Motors 23 bezeichnet sind, das aus der Beziehung

$$M_{mot} = p_{me} \cdot V_M/4\pi \qquad (6)$$

bestimmbar ist, in welcher mit $V_M$ das Gesamthubvolumen des Fahrzeugmotors 23 und mit $p_{me}$ der mittlere Verbrennungsdruck im Motor 23 bezeichnet sind, der als motorspezifischer Wert aus einem Motorenkennfeld ermittelbar ist, des in der Rechnerstufe 49 abrufbar abgelegt sein kann oder bezüglich des jeweils momentan gültigen Wertes des mittleren Verbrennungsdruckes fortlaufend aus der Erfassung der Motordrehzahl $\nu$ des Luftmassenliefergrades $M_L$ sowie des Kraftstoffverbrauches erzeugt wird.

In der Figur 3 ist ein für einen Fahrzeugmotor von 5 l Gesamthubvolumen typisches Kennfeld dieser Art dargestellt, in dem für unterschiedliche Luftmassenliefergrade als Parameter die Drehzahlabhängigkeit des als Ordinate aufgetragene mittleren Verbrennungsdruckes, angegeben in bar, dargestellt ist.

Weiter umfaßt die elektronische Verarbeitungseinheit 48 eine Vergleichsstufe 58, der als Eingaben die für die Radumfangsgeschwindigkeiten der Fahrzeugräder charakteristischen Ausgangssignale der Raddrehzahlsensoren 28 und 29 sowie 31 und 32 zugeleitet sind. Die Funktion dieser Vergleichsstufe 58 ist die folgende:
Aus einem Vergleich der Radumfangsgeschwindigkeit des linken Hinterrades und des linken Vorderrades sowie der Radumfangsgeschwindigkeit des rechten Hinterrades mit derjenigen des rechten Vorderrades werden für die am linken und am rechten Hinterrad vorliegenden Werte des Antriebsschlupfes $\lambda_a$ sowie auch des Bremsschlupfes $\lambda_b$ charakteristische Signale erzeugt, die fortlaufend an einem Schlupf-Signalausgang 59 der Vergleichsstufe 58 abgegeben werden, wobei die Bildung der Schlupfwerte gemäß der Beziehungen (1) und (2) erfolgt.

Desweiteren ermittelt die Vergleichsstufe 58 aus einem Vergleich der Radumfangsgeschwindigkeiten der Vorderräder, ob sich das Fahrzeug in einer Geradeausfahrt befindet, was an der Gleichheit der Radumfangsgeschwindigkeiten der Vorderräder erkennbar ist, oder in einer Kurvenfahrt, die durch ungleiche Werte der Radumfangsgeschwindigkeiten der Vorderräder des Fahrzeugs erkennbar ist. Desweiteren werden auch die Radumfangsgeschwindigkeiten der Hinterräder miteinander verglichen, wobei Gleichheit der Radumfangsgeschwindigkeiten der Hinterräder als Indiz für einen stabilen dynamischen Zustand des Fahrzeuges gewertet wird. Desweiteren sind der Vergleichsstufe 58 Ausgangssignale der ABS und ASR Steuereinheit zugeleitet, anhand derer die Vergleichsstufe 58 "erkennt", ob eine der beiden Regelungen aktiviert ist.

Ist weder das Antiblockiersystem 18,27 noch die Antriebs-Schlupf-Regelung 19,27 aktiviert und befindet sich das Fahrzeug in dynamisch stabilem Zustand in einer Geradeausfahrt, so gibt die Vergleichsstufe 58 an einem Steuerausgang 61 ein aus einer logischen UND-Verknüpfung der hierfür charakteristischen Betriebs-Zustand-Signale ein Steuersignal ab, durch das eine der elektronischen Rechnerstufe 49 und der Vergleichsstufe 58 nachgeschaltete Auswertungseinheit 62 der elektronischen Verarbeitungsstufe 48 zu einem Einlesen der an dem Schlupfsignal-Ausgang 59 der Vergleichsstufe 58 und an einem $\mu_a$-Signalausgang 63 in geeignet kodiertem Format bereitgestellten $\lambda$-und $\mu_a$-Wertepaare in eine im Rahmen der Auswertungseinheit 62 vorgesehene, nicht eigens dargestellte Speichereinheit, z B. ein Schieberegister angesteuert wird, in das die genannten $\lambda$-/$\mu_a$-Wertepaare in einem durch einen Zyklus-Zeitgeber 64 bestimmten "Takt" eingelesen werden, der demjenigen Rythmus entspricht, in dem für die Speicherung vorgesehene $\mu_a$- und $\lambda$-Wertepaare anfallen.

Mit jedem Einlesen eines neuen - "jüngsten" - Wertepaares in das Schieberegister werden sämtliche, bislang in dem Schieberegister gespeicherten Wertepaare "um eine Adresse weiter verschoben", wobei das zeitlich "älteste" Wertepaar gelöscht wird.

Zur Erläuterung der weiteren Funktion der Auswertungseinheit 62 sei angenommen, daß alle 50 ms ein Wertepaar ($\mu_a/\lambda$) ermittelt und in die Auswertungseinheit 62 eingelesen werden kann, d.h. daß in einer einem üblichen Anfahr-Vorgang des Fahrzeuges, der 5 s dauert, entsprechenden Zeitspanne 100 Wertepaare eingelesen werden können, falls zwischenzeitlich nicht die Antriebs-Schlupf-Regeleinrichtung aktiviert worden ist. Da das Ansprechen der Antriebs-Schlupf-Regeleinrichtung bei dem maßgeblichen Schwellenwert $\lambda_A$, der beim Erläuterungsbeispiel 0,4 beträgt (Figur 2), das Einlesen von Wertepaaren mit höheren Schlupfwerten als dem Ansprech-Schwellenwert $\lambda_A$ verhindert, werden durch die in die Auswertungseinheit 62 eingelesenen Wertepaare nur solche "Stützstellen" - Punkte - der Reifenkennlinie 34 oder der Reifenkennlinie 43 einer Sommer- bzw. Winterbereifung erfaßt, die auf den annähernd linear verlaufenden Ästen 37 und 38 der Sommerreifenkennlinie 34 bzw. dem ansteigenden Ast 44 der Winterreifenkennlinie 43 liegen. Der Quotient $\mu_{ai}/\lambda_{ai}$, wobei mit i die Einlesereihenfolge der Wertepaare ($\mu_a$,$\lambda_a$) bezeichnet sei, ist somit ein gutes Maß für die jeweilige Steigung der Reifenkennlinie 34 oder 43, so daß aus einer fortlaufenden Mittelwertsbildung der Quotienten der jeweils momentan gespeicherten Wertepaare ($\mu_a$,$\lambda_a$) die Anfangssteigungen der jeweiligen Reifenkennlinie 34 oder 43 sehr genau erfaßt und daraus auf die Art der Bereifung des Fahrzeuges geschlossen werden kann.

In einer einfachsten Gestaltung ist die Auswertungseinheit 62 auf eine derartige Ermittelung des Verlaufs der Reifenkennlinie 34 bzw. 43 durch Mittelwertsbildung über die Quotienten $\mu_a$/ $\lambda_a$ der jeweils momentan gespeicherten Wertepaare ausgelegt. Diese Mittelwertsbildung wird, solange das Fahrzeug im Betrieb - die Zündung eingeschaltet ist und das Fahrzeug rollt - fortlaufend aktualisiert, so daß auch durch Veränderungen der Betriebsbedingungen, z.B. durch Erwärmung der Reifen bedingte Änderungen der Reifenkennlinien 34 oder 43 erfaßbar sind. Da innerhalb eines einzigen Beschleunigungsvorganges, z.B. beim Anfahren, eine hinreichend hohe Anzahl von $\mu_a$,$\lambda_a$-Wertepaaren er-

faßt wird, "erkennt" die Auswertungseinheit 62 in jedem Fall rechtzeitig mit welchem Reifentyp das Fahrzeug bestückt ist und erzeugt Informationssignale für die elektronische ABS- und ASR-Steuereinheit 27 anhand derer diese auf die für den solchermaßen erkannten Bereifungstyp optimalen Ansprech-Schwellenwerte $\lambda_A$ und $\lambda_B$ für die jeweilige Regelungsart - Antiblockier- oder Antriebs-Schlupf-Regelung eingestellt wird.

Nachdem die Auswertungseinheit 62 festgestellt hat, mit welchem Typ von Bereifung das Fahrzeug ausgerüstet ist, vergleicht sie den Quotienten $\mu_a/ \lambda_a$ des jeweils zuletzt eingelesenen Wertepaares zunächst einmal mit dem Mittelwert der zuvor eingelesenen Wertepaare. Weicht dieser Quotient um mehr als ein Schwellenwert von z.B. 20% von dem Langzeit-Mittelwert ab, so wird dies von der Auswertungseinheit 62 dahingehend gewertet, daß das Fahrzeug auf einem Fahrbahnbereich mit niedrigem Kraftschlußbeiwert $\mu_a$ fährt, und es werden daher - vorsorglich - die Ansprechschwellen $_A$ und $_B$ für den Antriebs-Schlupf-Regelungsbetrieb bzw. den Antiblockier-Regelungsbetrieb herabgesetzt, z.B. auf 70% ihrer ursprünglichen Werte, so daß in dem solchermaßen erkannten Niedrig-$\mu$-Bereich ein sensibleres Ansprechen beider Regelungsarten erzielt wird. Ein Wertepaar, dessen Quotient von dem Langzeit-Mittelwert in der genannten Weise abweicht, wird bei der fortlaufenden Mittelwertsbildung nicht berücksichtigt, um die Empfindlichkeit der Niedrig-$\mu$-Erkennung nicht zu beeinträchtigen.

Es versteht sich, daß die Auswertungseinheit 62, abweichend von ihrer erläuterten, sehr einfachen Auslegung, auch dahingehend ausgelegt sein könnte, durch Interpolation zwischen den aus den $\mu_a$, $\lambda_a$-Wertepaaren, die fortlaufend eingelesen werden, einen Gesamtverlauf der Reifenkennlinien 34 oder 43 zu ermitteln, und ein neu einzulesendes Wertepaar, bevor es zur Interpolation mit herangezogen wird, daraufhin zu überprüfen, wie groß sein "Abstand" von der jeweiligen Reifenkennlinie 34 oder 43 ist, um es dann entweder für die weitere Interpolation zu berücksichtigen oder zur Niedrig-$\mu$-Erkennung heranzuziehen.

## Patentansprüche

1. Verfahren zur Anpassung von schlupfschwellwerten für ein Antriebs-Schlupf- und/oder ein Bremsschlupf-Regelsystem an die Bereifung eines Kraftfahrzeuges, wonach während eines dynamisch stabilen Bewegungszustand des Fahrzeuges - Geradeausfahrt und Drehzahlgleichheit der angetriebenen Fahrzeugräder - aus dynamischen Daten des Fahrzeugs, nämlich mindestens der Geschwindigkeit des Fahrzeuges und des Schlupfes der angetriebenen Fahrzeugräder, die mittels den angetriebenen und den nicht angetriebenen Fahrzeugrändern einzeln zugeordneter Raddrehzahlsensoren erfaßt werden, auf den zwischen der Fahrbahn und den angetriebenen Fahrzeugrädern ausgenutzten Kraftschlußbeiwert geschlossen wird und aus der Korrelation zwischen diesem ausgenutzten Kraftschlußbeiwert ($\mu$) mit dem hierfür gemessenen Antriebsschlupf auf die $\mu$-Schlupf-Charakteristik der Bereifung geschlossen wird, und, falls der für die Momentübertragung erforderliche Schlupfbedarf der Bereifung größer/kleiner ist als ein für einen Standardtyp der Bereifung charakteristischer Wert, die Ansprechschwellen für die Antriebs-Schlupf- und/oder die Antiblockier-Regelung angehoben bzw. abgesenkt werden,
**dadurch gekennzeichnet**,
daß aus den gemessenen Betriebsarten: Kraftstoffzufuhr und/oder Luftzufuhr, Motordrehzahl und Gesamtübersetzung des Antriebsstranges das an den angetriebenen Fahrzeugrädern bereitgestellte Antriebsmoment ermittelt und aus diesem bei vorgegebener oder gemessener Normalkraft - Achslast - $L_{HA}$ an den angetriebenen Fahrzeugrädern der ausgenutzte Kraftschlußbeiwert ($\mu_a$) gemäß der Relation $\mu_a = F_Z / L_{HA}$, in der mit $F_Z$ die absetzbare Zugkraft des Antriebsstranges des Fahrzeugs bezeichnet ist, welche ihrerseits durch die Beziehung $F_Z = M_Z/r_{dyn}$ gegeben ist, in welcher mit $r_{dyn}$ der dynamische Rollradius der angetriebenen Fahrzeugräder und mit $M_Z$ das über die Fahrbahn abgesetzte Vortriebsmoment des Antriebsstranges (10) bezeichnet sind, ermittelt wird und aus der Korrelation dieses Kraftschlußbeiwertes ($\mu_a$) mit dem gemessenen Antriebs-Schlupf die $\mu$-Schlupf-Charakteristik der Bereifung bestimmt wird und dieser entsprechend die Ansprech-Schlupf-Schwellen $\lambda_A$ und $\lambda_B$ für die Antriebs-Schlupf- und die Antiblokkier-Regelung eingestellt werden.

2. Verfahren nach Anspruch 1,
**dadurch gekennzeichnet**, daß
das Ausgangs-Drehmoment des Fahrzeugmotors (23) aus dem Massenliefergrad der den Brennkammern des Motors (23) zugeführten Verbrennungsluft ermittelt wird.

3. Verfahren nach Anspruch 1 oder Anspruch 2,
**dadurch gekennzeichnet**, daß
das Motordrehmoment aus der dem Motor (23) zugeführten Kraftstoffmenge ermittelt wird.

4. Einrichtung zur Durchführung des Verfahrens nach einem der Ansprüche 1 bis 3 für ein Straßenfahrzeug, das mindestens mit einer Antriebs-Schlupf-Regeleinrichtung und vorzugsweise auch mit einem Antiblockiersystem ausgerüstet ist, zu deren regelungsgerechter Steuerung eine elektronische Steuereinheit vorgesehen ist, die aus einer Verarbeitung von nach Pegel und/oder Frequenz für die Radumfangsgeschwindigkeiten der angetriebenen und der nicht angetriebenen Fahrzeugräder charakteristischen Ausgangssignalen von Raddrehzahlsensoren, die erforderlichen Ansteuersignale für die Antriebs-Schlupf-Regeleinrichtung und/oder das Antiblockiersystem erzeugt, derart, daß im Falle einer Antriebs-Schlupf-Regelung ein zum Durchdrehen neigendes Fahrzeugrad durch Aktivierung seiner Radbremse wieder verzögert wird und erforderlichenfalls das Motordrehmoment reduziert wird, in dem Falle einer Antiblockier-Regelung dahingehend, daß beim Überschreiten von Schwellenwerten des Bremsschlupfes $\lambda_b$ und/oder der Radverzögerungen die Bremskräfte reduziert werden,
**dadurch gekennzeichnet**, daß
zusätzlich zu der elektronischen Steuereinheit (27) der Schlupf-Regelsysteme (19,27 und 18,27) eine elektronische Verarbeitungseinheit (48) vorgesehen ist, die aus den Eingaben:

1. Drehzahl $\nu$ des Fahrzeugmotors (23)
2. Massenliefergrad der dem Motor zugeführten Verbrennungsluftmenge und/oder dem Motor zugeführte Kraftstoffmenge
3. Raddrehzahlen der angetriebenen und der nicht angetriebenen Fahrzeugräder und
4. Achslast $L_{HA}$ an den angetriebenen Fahrzeugrädern

den im Fahrbetrieb momentan ausgenutzten Kraftschlußbeiwert $\mu_a$ aus der Beziehung

$$\mu_a = F_Z/L_{HA}$$

bestimmt, in welcher mit $F_Z$ die absetzbare Zugkraft des Antriebsstranges (10) des Fahrzeuges bezeichnet ist, welche ihrerseits durch die Beziehung

$$F_Z = M_Z/r_{dyn}$$

gegeben ist, in welcher mit $r_{dyn}$ der dynamische Rollradius der angetriebenen Fahrzeugräder und mit $M_Z$ das über die Fahrbahn abgesetzte Vortriebsmoment des Antriebsstranges (10) bezeichnet sind, welches seinerseits aus der Beziehung

$$M_Z = M_{mot} \cdot i_{Ges} \cdot \eta_A$$

bestimmt wird, in welcher mit $i_{Ges}$ die Gesamtübersetzung des Antriebsstranges (10), mit $\eta_A$ der mechanische Gesamtwirkungsgrad des Antriebsstranges (10) des Fahrzeuges und mit $M_{mot}$ das Ausgangsdrehmoment des Motors (23) bezeichnet ist, das seinerseits aus der Beziehung

$$M_{mot} = p_{me} \cdot V_M/4\pi$$

bestimmt wird, in welcher mit $V_M$ das Gesamthubvolumen des Fahrzeugmotors (23) und mit $p_{me}$ der mittlere Verbrennungsdruck im Motor (23) bezeichnet sind, der aus einem für den Fahrzeugmotor charakteristischen Kennfeld bestimmt wird.

**5.** Einrichtung nach Anspruch 4,
**dadurch gekennzeichnet**, daß
zur Erfassung des Massenliefergrades der Verbrennungsluft ein temperaturempfindliches Luftmassenstrom-Meßgerät (54) vorgesehen ist.

**6.** Einrichtung nach Anspruch 4 oder Anspruch 5,
**dadurch gekennzeichnet**, daß
eine auf den Einfederungszustand der Fahrzeugfederung ansprechende Achslast-Meßeinrichtung vorgesehen ist, die für die Achslast charakteristische elektrische Ausgangssignale erzeugt.

**7.** Einrichtung nach einem der Ansprüche 4 bis 6, **dadurch gekennzeichnet**, daß im Rahmen der elektronischen Verarbeitungseinheit eine elektronische Rechnerstufe (49) vorgesehen ist, die fortlaufend ein für den ausgenutzten Kraftschlußbeiwert ($\mu_a$) charakteristisches elektrisches Ausgangssignal erzeugt, weiter eine Vergleichsstufe (58), welche fortlaufend ein für den Schlupf ($\lambda_a$) der angetriebenen Fahrzeugräder charakteristisches Ausgangssignal erzeugt und eine mit der elektronischen Rechnerstufe (49) und der Vergleichsstufe (58) synchronisierte Auswertungseinheit (62) vorgesehen sind, welche aus einer Mehrzahl miteinander korrelierter $\mu_a,\lambda_a$-Wertepaare eine fortlaufende, gleitende Bildung des Mittelwertes der Quotienten $\mu_a/\lambda_a$ als für die Bereifung charakteristische Größe bildet.

## Claims

**1.** Method for adapting slip threshold values for a drive slip and/or a brake slip control system to the tyres fitted to a motor vehicle, according to which, during a dynamically stable state of motion of the vehicle - straight-ahead travel and equality of speed of the driven vehicle wheels - the adhesion coefficient utilised between the roadway and the driven vehicle wheels is deduced from dynamic data of the vehicle, namely at least the speed of the vehicle and the slip of the driven vehicle wheels, which are detected by means of wheel speed sensors individually allocated to the driven and to the non-driven vehicle wheels, and from the correlation between this utilised adhesion coefficient ($\mu_a$) and the drive slip measured for this purpose, the $\mu$ slip characteristic of the tyres is deduced and, if the slip requirement of the tyres required for the torque transfer is greater/less than a value characteristic of a standard type of the tyres, the response thresholds for the drive slip and/or the antiblocking control are raised or lowered, characterised in that the drive torque provided at the driven vehicle wheels is determined from the measured operating types: fuel supply and/or air supply, engine speed and total transmission ratio of the drive train, and from this the adhesion coefficient ($\mu_a$) utilised is determined, with predetermined or measured normal force - axle load - $L_{HA}$ at the driven vehicle wheels, in accordance with the relation $\mu_a = F_Z / L_{HA}$, in which $F_Z$ designates the applicable traction force of the drive train of the vehicle which, in turn, is given by the relation $F_Z = M_Z/r_{dyn}$ in which $r_{dyn}$ designates the dynamic rolling radius of the driven vehicle wheels and $M_Z$ designates the propulsive torque of the drive train (10) applied via the roadway, and from the correlation of this adhesion coefficient ($\mu_a$) with the measured drive slip, the $\mu$ slip characteristic of the tyres is determined and, corresponding to this, the response slip thresholds $\lambda_A$ and $\lambda_B$ are set for the drive slip and the antiblocking control.

**2.** Method according to Claim 1, characterised in that the output torque of the vehicle engine (23) is determined from the mass delivery rate of the combustion air supplied to the combustion chambers of the engine (23).

**3.** Method according to Claim 1 or Claim 2, characterised in that the engine torque is determined from the fuel quantity supplied to the engine (23).

**4.** Device for carrying out the method according to one of Claims 1 to 3 for a road vehicle which is equipped at least with a drive slip control device and preferably also with an antiblocking system, for the regulation-oriented control of which an electronic control unit is provided which generates from processing output signals of wheel speed sensors, which are characteristic in level and/or frequency of the wheel speeds of the driven and the non-driven vehicle wheels, the required drive signals for the drive slip control device and/or the antiblocking system in such a manner that, in the case of a drive slip control, a vehicle wheel tending to spin is decelerated again by activating its wheel brake and, if necessary, the engine torque is reduced and, in the case of antiblocking control, with the aim that the braking forces are reduced when threshold values of the brake slip $\lambda_b$ and/or of the wheel decelerations are exceeded, characterised in that, in addition to the electronic control unit (27) of the slip control systems (19, 27 and 18, 27), an electronic processing unit (48) is provided which determines from the inputs:

1. Rotational speed $\nu$ of the vehicle engine (23)
2. Mass delivery rate of the combustion air quantity supplied to the engine and/or fuel quantity supplied to the engine
3. Wheel speeds of the driven and of the non-driven vehicle wheels and
4. Axle load $L_{HA}$ at the driven vehicle wheels,

the adhesion coefficient $\mu_a$ instantaneously utilised in driving operation, from the relation

$$\mu_a = F_Z/L_{HA}$$

in which $F_Z$ designates the applicable traction force of the drive train (10) of the vehicle which, in turn, is given by the relation

$$F_Z = M_Z/r_{dyn}$$

in which $r_{dyn}$ designates the dynamic rolling radius of the driven vehicle wheels and $M_Z$ the propulsive torque of the drive train (10), which is applied via the roadway and which, in turn, is determined from the relation

$$M_Z = M_{mot} \cdot i_{Ges} \cdot \eta_A$$

in which $i_{Ges}$ designates the overall transmission ratio of the drive train (10), $\eta_A$ designates the total mechanical efficiency of the drive train (10) of the vehicle and $M_{mot}$ designates the output torque of the engine (23) which, in turn, is determined from the relation

$$M_{mot} = P_{me} \cdot V_M/4\pi$$

in which $V_M$ designates the total displacement of the vehicle engine (23) and $p_{me}$ designates the mean combustion pressure in the engine (23) which is determined from a family of curves characteristic of the vehicle engine.

5. Device according to Claim 4, characterised in that a temperature-sensitive air mass flow measuring instrument (54) is provided for detecting the mass delivery rate of the combustion air.

6. Device according to Claim 4 or Claim 5, characterised in that an axle load measuring device responding to the spring deflection of the vehicle suspension is provided which generates electrical output signals characteristic of the axle load.

7. Device according to one of Claims 4 to 6, characterised in that, in connection with the electronic processing unit, an electronic computer stage (49) is provided which continuously generates an electrical output signal characteristic of the adhesion coefficient ($\mu_a$) utilised, furthermore a comparison stage (58) which continuously generates an output signal characteristic of the slip ($\lambda_a$) of the driven vehicle wheels and an evaluating unit (62) synchronised with the electronic computer stage (49) and the comparison stage (58) are provided, which evaluating unit forms from a multiplicity of mutually correlated $\mu_a$, $\lambda_a$ value pairs a continuous sliding mean of the quotient $\mu_a/\lambda_a$ as quantity characteristic of the tyres.

**Revendications**

1. Procédé pour adapter des valeurs de seuil de glissement pour un système de réglage du glissement d'entraînement (système antipatinage) et/ou du glissement de freinage (système antiblocage) aux bandages pneumatiques d'un véhicule automobile, selon lequel, pendant un état de mouvement dynamique stable du véhicule - marche en ligne droite et égalité des vitesses de rotation des roues motrices du véhicule -, le coefficient d'adhérence exploité entre la chaussée et les roues motrices du véhicule est déterminé d'après des données dynamiques du véhicule, à savoir d'après au moins la vitesse du véhicule et le glissement des roues motrices, lesquels sont détectés au moyen de capteurs de vitesse de rotation de roue coordonnés individuellement aux roues motrices et aux roues non motrices du véhicule, et la caractéristique $\mu$-glissement des pneumatiques est déterminée à partir de la corrélation entre ce coefficient d'adhérence exploité ($\mu$) et le glissement d'entraînement mesuré à cet effet, et selon lequel, au cas où le besoin de glissement des pneumatiques nécessaire à la transmission du couple est plus grand ou plus petit qu'une valeur caractéristique pour un type standard des pneumatiques, les seuils de réponse pour la régulation antipatinage et/ou la régulation antiblocage sont relevés ou abaissés,
caractérisé en ce que
le couple moteur mis à disposition aux roues motrices du véhicule est déterminé d'après les paramètres de fonctionnement mesurés que sont l'alimentation en carburant et/ou l'alimentation en air, la vitesse de rotation du moteur et le rapport total de la transmission, le coefficient d'adhérence exploité ($\mu_a$) est déterminé à partir de ces paramètres pour une charge d'essieu-force normale $L_{HA}$ préfixée ou mesurée aux roues motrices, selon la relation $\mu_a = F_Z / L_{HA}$, dans laquelle $F_Z$ désigne l'effort de traction de la transmission du véhicule transmissible à la chaussée, effort qui est lui-même fixé par la relation $F_Z = M_Z/r_{dyn}$, dans laquelle $r_{dyn}$ désigne le rayon de roulement dynamique des roues motrices et $M_Z$ le couple de propulsion de la transmission (10) transmis par la chaussée, la caractéristique $\mu$-glissement des pneumatiques est déterminée à partir de la corrélation de ce coefficient d'adhérence ($\mu_a$) avec le glissement d'entraînément mesuré et les seuils de glissement de réponse $\lambda_A$ et $\lambda_B$ pour la régulation antipatinage et la régulation antiblocage sont ajustés en conformité avec cette caractéristique.

2. Procédé selon la revendication 1, caractérisé en ce que le couple de sortie du moteur (23) du véhicule est déterminé d'après le coefficient de rendement massique de l'air de combustion amené aux chambres de combustion du moteur (23).

3. Procédé selon la revendication 1 ou 2, caractérisé en ce que le couple du moteur est déterminé d'après la quantité de carburant amenée au moteur (23).

4. Dispositif pour la mise en oeuvre du procédé selon une des revendications 1 à 3 pour un véhicule routier équipé d'au moins un dispositif de réglage du glissement d'entraînement (système antipatinage) et de préférence aussi d'un système antiblocage, pour la commande desquels en conformité avec la régulation voulue, on a prévu une unité électronique de commande qui, sur la base d'un traitement de signaux de sortie de capteurs de vitesse de rotation de roues, signaux qui sont caractéristiques, par le niveau et/ou la fréquence, pour les vitesses périphériques des roues motrices et des roues non motrices du véhicule, génère les signaux de commande nécessaires au dispositif de réglage du glissement d'entraînement et/ou au système antiblocage, de telle sorte que lors d'une régulation du glissement d'entraînement, une roue ayant tendance à patiner est décélérée de nouveau par le serrage de son frein de roue et le couple du moteur est au besoin réduit, et que, lors d'une régulation antiblocage, les efforts de freinage sont réduits en cas de dépassement de valeurs de seuil du glissement de freinage $\lambda_b$ et/ou des décélérations de roue,
caractérisé en ce que, en plus de l'unité électronique de commande (27) des systèmes de réglage du glissement (19, 27 et 18, 27), on a prévu une unité électronique de traitement (48) qui, à partir des informations d'entrée que sont:

1. la vitesse de rotation $\nu$ du moteur (23) du véhicule
2. le coefficient de rendement massique de la quantité d'air de combustion amenée au moteur et/ou de la quantité de carburant amenée au moteur
3. les vitesses de rotation des roues motrices et des roues non motrices du véhicule et
4. la charge d'essieu $L_{HA}$ sur les roues motrices,

détermine le coefficient d'adhérence $\mu_a$ exploité à ce moment pendant la marche, selon la relation

$$\mu_a = F_Z/L_{HA}$$

dans laquelle $F_Z$ désigne l'effort de traction de la transmission (10) du véhicule transmissible à la chaussée, effort qui est lui-même fixé par la relation

$$F_Z = M_Z/r_{dyn}$$

dans laquelle $r_{dyn}$ désigne le rayon de roulement dynamique des roues motrices et $M_Z$ le couple de propulsion de la transmission (10) transmis par la chaussée, couple qui est lui-même déterminé selon la relation

$$M_Z = M_{mot} \cdot i_{Ges} \cdot \eta_A$$

dans laquelle $i_{Ges}$ désigne le rapport total de la transmission (10), $\eta_A$ le rendement mécanique global de la transmission (10) du véhicule et $M_{mot}$ le couple de sortie du moteur (23), lequel est lui-même déterminé selon la relation

$$M_{mot} = P_{me} \cdot V_M/4\pi$$

dans laquelle $V_M$ désigne la cylindrée totale du moteur (23) du véhicule et $P_{me}$ la pression moyenne de combustion dans le moteur (23), laquelle est déterminée d'après un diagramme caractéristique du moteur.

**5.** Dispositif selon la revendication 4, caractérisé en ce que, pour déterminer le coefficient de rendement massique de l'air de combustion, on a prévu un appareil de mesure du débit massique de l'air (54), appareil qui est sensible à la température.

**6.** Dispositif selon la revendication 4 ou 5, caractérisé en ce que l'on a prévu un dispositif de mesure de la charge d'essieu qui réagit à l'état de compression de la suspension du véhicule et génère des signaux électriques de sortie caractéristiques de la charge d'essieu.

**7.** Dispositif selon une des revendications 4 à 6, caractérisé en ce que, dans le cadre de l'unité électronique de traitement, on a prévu un étage électronique de calcul (49) générant en continu un signal électrique de sortie caractéristique du coefficient d'adhérence exploité ($\mu_a$), un étage de comparaison (58) générant en continu un signal de sortie caractéristique du glissement ($\lambda_a$) des roues motrices, de même qu'une unité d'exploitation (62) synchronisée avec l'étage électronique de calcul (49) et l'étage de comparaison (58) et réalisant, à partir d'une pluralité de paires de valeurs $\mu_a,\lambda_a$ mutuellement corrélées, une formation continue glissante de la valeur moyenne des quotients $\mu_a/\lambda_a$ en tant que grandeur caractéristique des pneumatiques.

Fig. 1

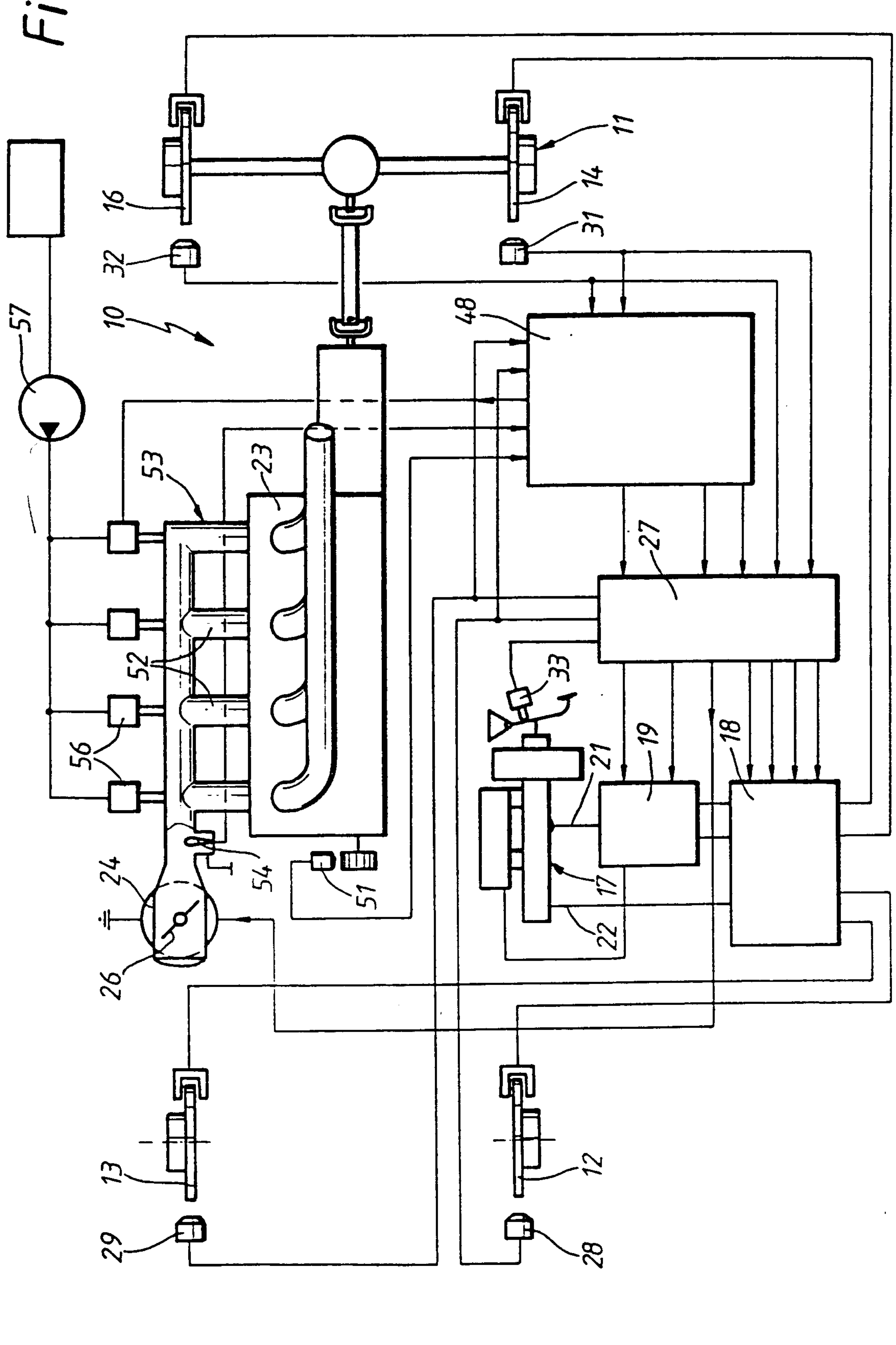
10
11
12
13
14
16
17
18
19
21
22
23
24
26
27
28
29
31
32
33
48
51
52
53
54
56
57

Fig. 2

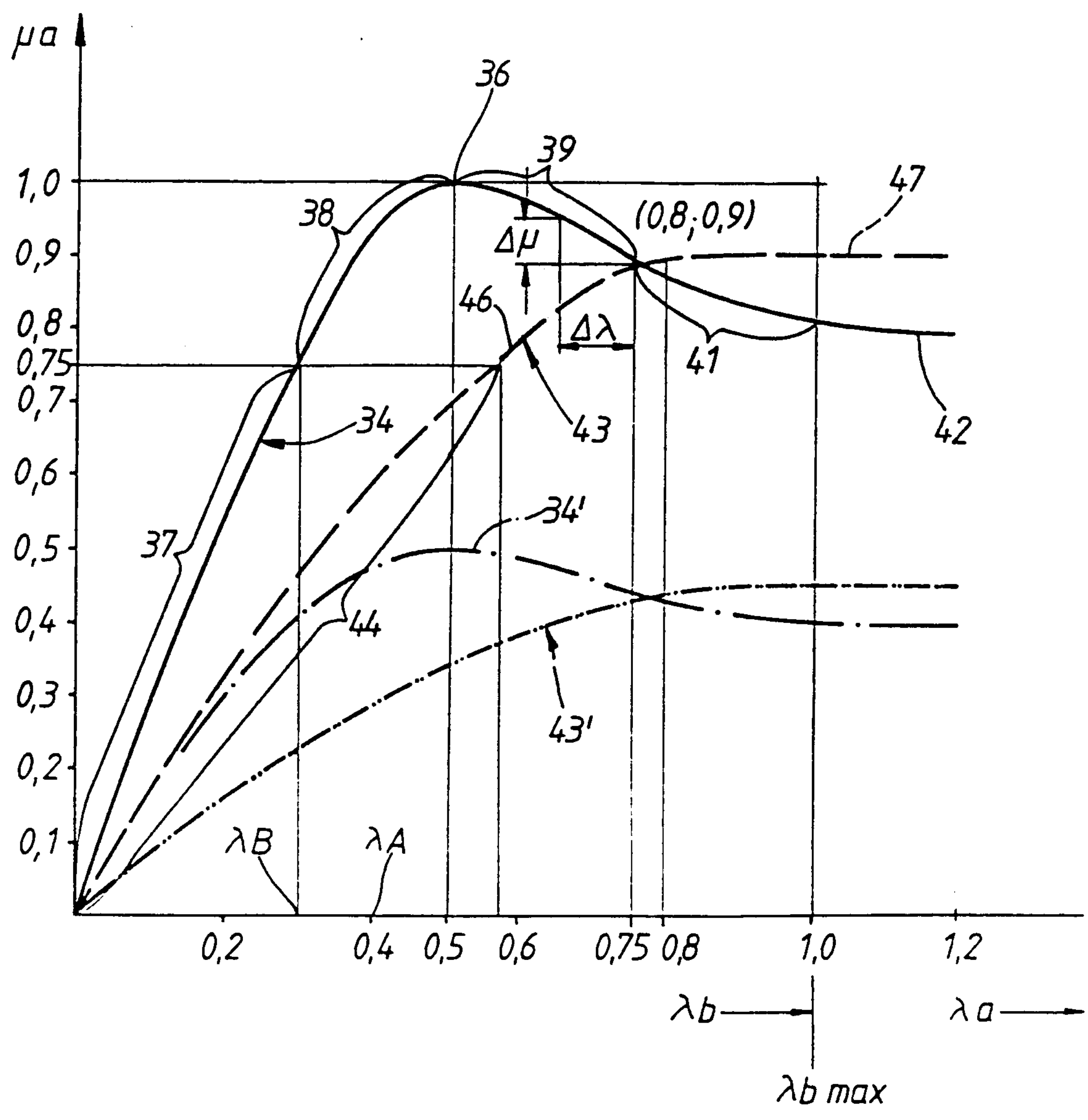
μa
36
39
47
1,0
38
(0,8;0,9)
0,9
Δμ
0,8
46
Δλ
41
0,75
0,7
34
43
42
0,6
34'
0,5
37
0,4
44
0,3
43'
0,2
0,1
λB
λA
0,2
0,4
0,5
0,6
0,75
0,8
1,0
1,2
λb
λa
λb max

Fig. 3

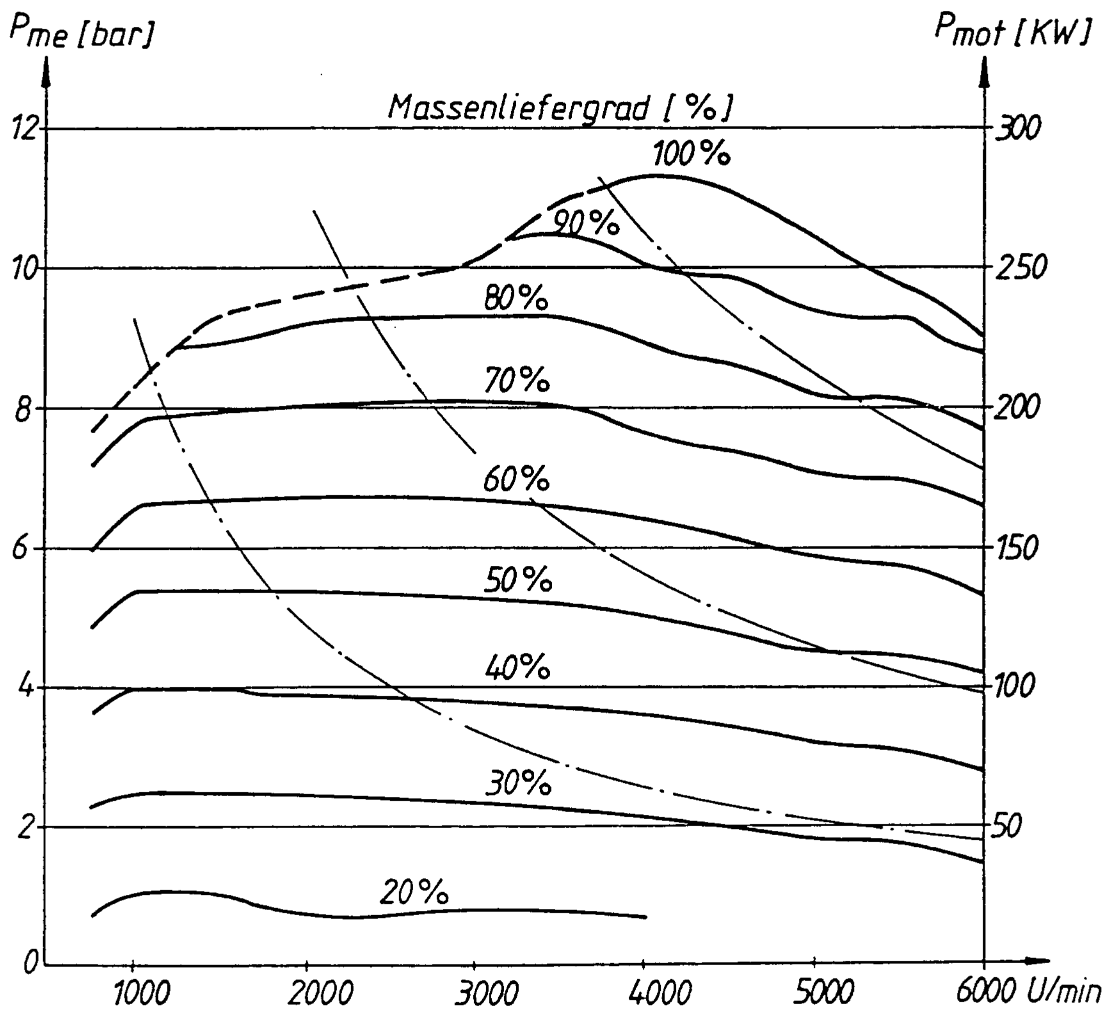
Pme [bar]
Pmot [KW]
Massenliefergrad [%]
100%
90%
80%
70%
60%
50%
40%
30%
20%
0
2
4
6
8
10
12
50
100
150
200
250
300
1000
2000
3000
4000
5000
6000 U/min

Fig. 4

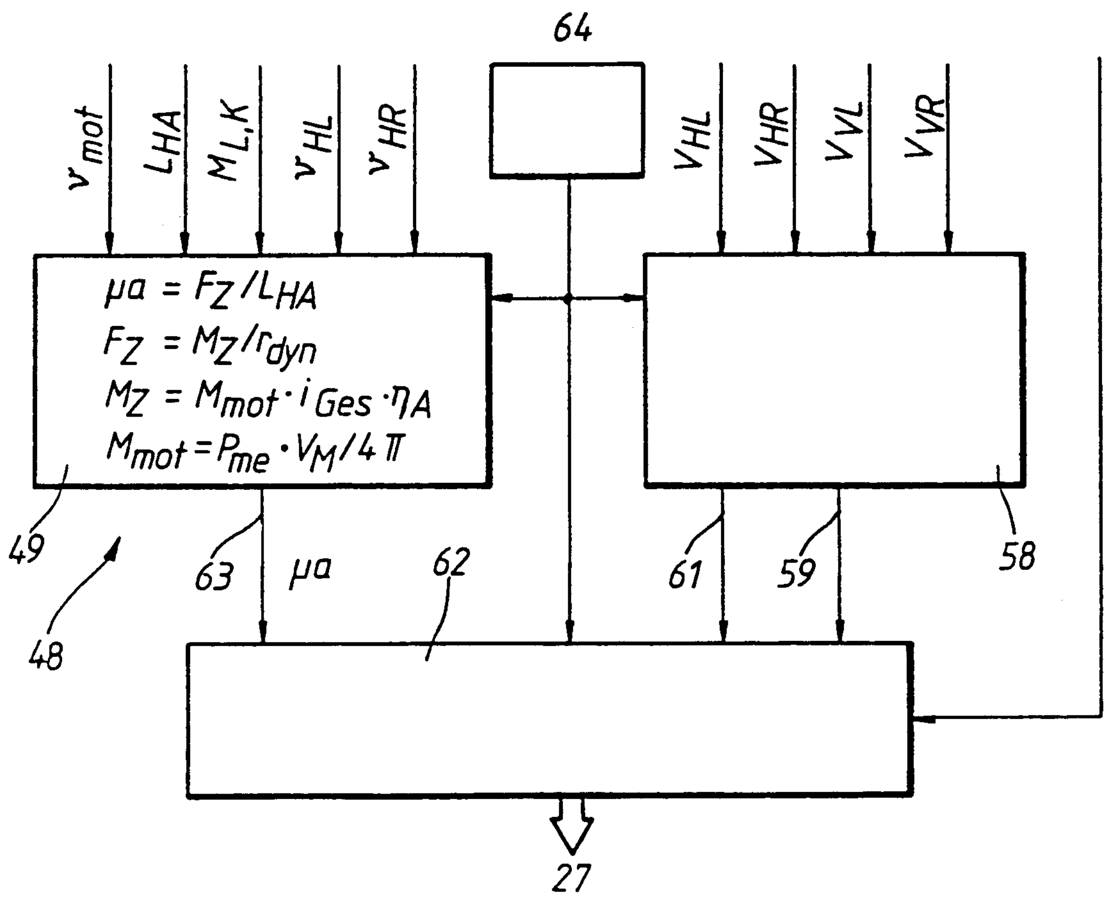
64
$\nu_{mot}$
$L_{HA}$
$M_{L,K}$
$\nu_{HL}$
$\nu_{HR}$
$V_{HL}$
$V_{HR}$
$V_{VL}$
$V_{VR}$
$\mu a = F_Z / L_{HA}$
$F_Z = M_Z / r_{dyn}$
$M_Z = M_{mot} \cdot i_{Ges} \cdot \eta_A$
$M_{mot} = P_{me} \cdot V_M / 4\pi$
49
48
63
$\mu a$
62
61
59
58
27